Europäisches Patentamt

(19) European Patent Office

Office européen des brevets

(11) EP 0 579 534 B1

(12) **FASCICULE DE BREVET EUROPEEN**

(45) Date de publication et mention
de la délivrance du brevet:
**14.04.1999 Bulletin 1999/15**

(51) Int. Cl.$^6$: **B32B 15/08**, B32B 27/20,
F16F 9/30

(21) Numéro de dépôt: **93401800.3**

(22) Date de dépôt: **09.07.1993**

(54) **Procédé de fabrication d'une tôle sandwich munie d'un revêtement métallique**

Verfahren zur Herstellung eines mit einer Metallschicht überzogenen Sandwichblechs

Method for the manufacture of a metal coated sandwich panel

(84) Etats contractants désignés:
**AT BE CH DE DK ES FR GB GR IT LI LU NL PT SE**

(30) Priorité: **17.07.1992 FR 9208865**

(43) Date de publication de la demande:
**19.01.1994 Bulletin 1994/03**

(73) Titulaire: **SOLLAC**
**92800 Puteaux (FR)**

(72) Inventeur: **Tremouilles, Gilles**
**F-92100 Boulogne-Billancourt (FR)**

(74) Mandataire: **Polus, Camille et al**
**c/o Cabinet Lavoix**
**2, Place d'Estienne d'Orves**
**75441 Paris Cedex 09 (FR)**

(56) Documents cités:
**EP-A- 0 219 104       EP-A- 0 363 632**
**EP-A- 0 385 684       US-A- 4 353 951**

- **DATABASE WPIL Week 9048, Derwent
  Publications Ltd., London, GB; AN 90-358075**
- **PATENT ABSTRACTS OF JAPAN vol. 12, no. 349
  (C-529)20 Septembre 1988**

## Description

La présente invention concerne un procédé de fabrication d'une tôle sandwich perfectionnée.

Les tôles sandwichs ont des propriétés d'amortissement des vibrations qui sont mises à profit en particulier pour réduire la propagation du bruit.

Les tôles sandwichs sont utilisées par exemple pour la fabrication d'éléments de carrosserie de véhicules ou de panneaux d'habillage d'appareils ménagers.

On connaît déjà dans l'état de la technique des tôles sandwichs comportant deux tôles métalliques externes entre lesquelles est intercalée une couche de polymère.

Il est connu de protéger une tôle métallique contre la corrosion en déposant sur ses faces un revêtement de zinc ou d'alliage de zinc par voie électrolytique. La tôle métallique défile dans une cellule électrolytique contenant un bain d'ions à déposer sur la tôle. La tôle est en contact avec des rouleaux conducteurs d'électricité, formant cathode, et au moins une anode est placée en regard de chaque rouleau. En alimentant électriquement chaque couple rouleau conducteur-anode, on forme un revêtement électrolytique de zinc ou d'alliage de zinc sur la face de la tôle opposée au rouleau.

Il n'est pas possible de former un revêtement électrolytique sur une tôle sandwich de type connu en utilisant une cellule électrolytique telle que décrite ci-dessus. En effet, si on fait défiler la tôle sandwich sur les rouleaux conducteurs, la face de la tôle sandwich opposée aux rouleaux est isolée électriquement par la couche de polymère, ce qui empêche le dépôt de métal.

On a donc proposé, pour protéger les faces métalliques d'une tôle sandwich contre la corrosion de revêtir séparément les tôles métalliques par un dépôt électrolytique avant leur assemblage avec la couche de polymère.

Cette technique a pour inconvénient la nécessité de connaître à l'avance qu'elle sera l'utilisation future de la tôle sandwich afin de savoir s'il faut utiliser ou non pour sa fabrication des tôles comportant un revêtement électrolytique.

US-A-4 353 951, EP-A-0 363 632, JP-A-2 258 343, EP-A-0 219 104 et EP-A-0 385 684 décrivent des tôles sandwich aptes au soudage comprenant une couche intermédiaire de polymère munie de grains métalliques.

L'invention a pour but de simplifier la fabrication des tôles sandwich comprenant un revêtement contenant du zinc ou un alliage de zinc.

A cet effet, l'invention a pour objet un procédé de fabrication d'une tôle sandwich revêtue comprenant deux tôles métalliques externes entre lesquelles est intercalée une couche de polymère, la face libre d'au moins une des tôles métalliques comportant un revêtement métallique, procédé dans lequel:

- on applique sur une face d'une première tôle métallique une couche de polymère liquide contenant un solvant et chargée de grains métalliques sensiblement sphériques, fabriqués dans un matériau plus ductile que le matériau constituant les tôles métalliques, ces grains ayant un diamètre D supérieur à l'épaisseur E de la couche de polymère de la tôle sandwich finale, ce diamètre D vérifiant la relation suivante :

$$1,1E < D < 1,6E,$$

- on applique une seconde tôle métallique sur la face libre de la couche de polymère,
- on chauffe l'ensemble tôles métalliques-polymère,
- simultanément au chauffage, on presse les deux tôles métalliques l'une contre l'autre de façon à écraser légèrement les grains métalliques, et
- on dépose, par voie électrolytique, un revêtement métallique sur la face libre d'au moins une des tôles métalliques.

Suivant d'autres caractéristiques de ce procédé:

- la couche de polymère comprend du polyuréthane et est chargée de grains de nickel pur ayant un diamètre D à peu près égal à 1,5E;
- après application de la couche de polymère sur la première tôle métallique, on fait évaporer le solvant de cette couche par chauffage;
- la proportion de grains métalliques dans la couche de polymère est de 5% à 25% en masse ou de 0,75% à 3,75% en volume;
- les tôles métalliques sont en acier selon la norme française super ES, et la couche de polymère comprend du polyuréthane et est chargée de grains de nickel pur selon une proportion de 20% en masse environ.

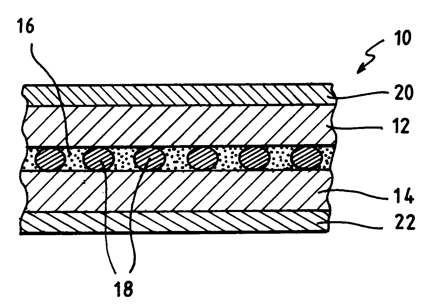

Un exemple de réalisation de l'invention sera décrit ci-dessous en se référant au dessin annexé dans lequel la figure unique est une vue en coupe schématique d'une tôle sandwich selon l'invention.

On voit sur la figure une tôle sandwich selon l'invention désignée par la référence générale 10.

La tôle 10 comprend deux tôles métalliques 12,14 externes entre lesquelles est intercalée une couche 16 de polymère contenant des grains métalliques 18.

Les grains 18 sont constitués d'un matériau plus ductile que celui des tôles métalliques 12,14.

Chacune des faces externes des tôles métalliques 12,14 est recouverte d'un revêtement métallique 20,22 destiné à protéger la tôle sandwich 10 contre la corrosion.

On décrira maintenant les matériaux constituant les différents éléments de la tôle sandwich 10 décrite dans cet exemple.

Les tôles métalliques 12,14 sont en acier selon la norme française super ES, du type calmé additionné de titane avec carbone dégazé sous vide, et ont une épaisseur de 0,4 mm.

La couche 16 de polymère est en polyuréthane thermoplastique et a une épaisseur de 50 μm.

Les grains métalliques 18 sont en nickel pur et ont une dimension adaptée pour assurer leur contact avec les deux tôles 12,14 à la fois. La dimension des grains 18 et leur proportion dans la couche de polymère 16 seront précisées ultérieurement.

Les revêtements 20,22 comprennent du zinc ou un alliage de zinc et de nickel et ont une épaisseur d'environ 10 μm.

On décrira maintenant un procédé de fabrication de la tôle 10.

Dans un premier temps, on applique sur une première tôle métallique 12 une couche de polymère 16 liquide contenant des grains métalliques 18 à peu près sphériques.

Les grains métalliques ont un diamètre D vérifiant la relation suivante :

$$1,1\,E < D < 1,6\,E$$

dans laquelle E est l'épaisseur de la couche de polymère 16 de la tôle sandwich finale.

Dans l'exemple décrit, E = 50 μm et D = 1,5 E = 75 μm.

La proportion de grains métalliques 18 dans la couche de polymère 16 est de 5% à 25% en masse, ce qui; correspond à peu près à une proportion de 0,75% à 3,75% en volume.

Dans l'exemple décrit, la proportion de grains métalliques 18 dans la couche de polymère 16 est d'environ 20% en masse, ce qui correspond à environ 3% en volume.

Ensuite, on fait évaporer le solvant contenu dans la couche de polymère 16 par chauffage.

On applique la seconde tôle métallique 14 sur la face libre de la couche de polymère 16.

On chauffe, l'ensemble tôles métalliques-couche de polymère de façon à durcir le polymère et à le faire adhérer sur les faces en regard des tôles 12,14.

Pendant le chauffage, on presse les deux tôles métalliques 12,14 l'une contre l'autre de manière que la couche de polymère 16 ait une épaisseur E souhaitée et que les grains métalliques 18, de diamètre D supérieur à l'épaisseur E de la couche 16, soient légèrement écrasés et déformés entre les tôles métalliques 12,14 plus dures que les grains.

De cette façon, les grains métalliques 18 sont en contact avec les deux tôles métalliques 12,14 à la fois. Les grains 18 déformés ont une dimension, suivant l'épaisseur E, égale à cette épaisseur E et une dimension, dans une direction sensiblement transversale à l'épaisseur E, supérieure à cette épaisseur E.

On obtient ainsi une tôle sandwich dont la couche de polymère intermédiaire est chargée de grains métalliques permettant de relier électriquement les deux tôles métalliques.

Les opérations qu'on vient de décrire peuvent être réalisées en continu en utilisant des moyens de défilement des tôles métalliques, des moyens d'application de la couche de polymère, des moyens de chauffage et des moyens de compression de types connus.

On décrira maintenant le dépôt par voie électrolytique des revêtements métalliques contenant du zinc sur les faces externes des tôles métalliques 12,14 de la tôle sandwich. Cette opération est appelée habituellement électrozingage.

On fait défiler la tôle sandwich dans un bain d'au moins une cellule électrolytique, de type connu, contenant des ions de zinc à déposer sur les faces de la tôle.

De manière classique, la cellule électrolytique comprend des rouleaux conducteurs d'électricité, formant cathode, en contact avec une des faces de la tôle sandwich, et au moins une anode placée en regard de chaque rouleau. Chaque couple rouleau conducteur-anode est alimenté en courant électrique d'intensité appropriée pouvant atteindre, voire dépasser, 50 A/dm$^2$.

Les grains métalliques 18 relient électriquement les deux tôles métalliques 12,14 de la tôle sandwich de manière qu'elles sont au même potentiel électrique que les rouleaux formant cathode.

Le métal de revêtement contenu dans le bain est donc transporté sous l'effet du courant d'électrolyse entre les anodes et la face de la tôle sandwich opposée aux rouleaux.

On fait défiler la tôle entre les rouleaux de façon que ses deux faces soient alternativement en contact avec un des rouleaux afin de déposer un revêtement sur les deux faces de la tôle sandwich.

La proportion de grains métalliques dans la couche de polymère étant supérieure a 5% en masse, la conduction électrique entre les deux tôles métalliques de la tôle sandwich est bonne. Ceci permet de revêtir par électrozingage les faces externes des tôles métalliques de la tôle sandwich après leur assemblage avec la couche de polymère.

Par ailleurs, la proportion de grains métalliques dans la couche de polymère étant inférieure à 25% en masse, la tôle sandwich a une bonne capacité d'amortissement.

L'invention ne se limite pas a l'exemple de réalisation décrit.

La tôle sandwich peut comporter un revêtement électrolytique sur une seule de ses faces.

La tôle sandwich peut comporter des revêtements électrolytiques différents sur chacune de ses faces.

La tôle sandwich peut comporter deux tôles métalliques constituées de matériaux métalliques différents.

La couche de polymère peut comprendre d'autres polymères que le polyuréthane, par exemple du polychlorure de vinyle ou du polyester.

La couche de polymère peut contenir des grains métalliques sensiblement sphériques fabriqués dans des matériaux bons conducteurs d'électricité autres que le nickel, en particulier le fer, le chrome, le cuivre et l'aluminium.

L'invention présente en particulier les avantages suivants.

Le revêtement métallique peut être déposé sur les faces externes des tôles métalliques de la tôle sandwich après leur assemblage avec la couche de polymère.

Le revêtement métallique de la tôle sandwich peut être déposé par voie électrolytique dans des installations de type connu.

## Revendications

1. Procédé de fabrication d'une tôle sandwich revêtue comprenant deux tôles métalliques externes (12, 14) entre lesquelles est intercalée une couche (16) de polymère, la face libre d'au moins une des tôles métalliques (12, 14) comportant un revêtement métallique (20, 22), procédé dans lequel:

   - on applique sur une face d'une première tôle métallique (12, 14) une couche (16) de polymère liquide contenant un solvant et chargée de grains métalliques (18) sensiblement sphériques fabriqués dans un matériau plus ductile que le matériau constituant les tôles métalliques (12, 14), ces grains ayant un diamètre D supérieur à l'épaisseur E de la couche (16) de polymère de la tôle sandwich finale, ce diamètre D vérifiant la relation suivante:

   $$1{,}1E < D < 1{,}6E,$$

   - on applique une seconde tôle métallique (12, 14) sur la face libre de la couche (16) de polymère,
   - on chauffe l'ensemble tôles métalliques-polymère (12, 14, 16),
   - simultanément au chauffage, on presse les deux tôles métalliques (12, 14) l'une contre l'autre de façon à écraser légèrement les grains métalliques (18), et
   - on dépose, par voie électrolytique, un revêtement métallique (20, 22) sur la face libre d'au moins une des tôles métalliques (12, 14).

2. Procédé selon la revendication 1, dans lequel la couche (16) de polymère comprend du polyuréthane et est chargée de grains (18) de nickel pur ayant un diamètre D à peu près égal à 1,5E.

3. Procédé selon la revendication 1 ou 2, dans lequel, après application de la couche (16) de polymère sur la première tôle métallique (12, 14), on fait évaporer le solvant de cette couche (16) par chauffage.

4. Procédé selon l'une quelconque des revendications précédentes, dans lequel la proportion de grains métalliques (18) dans la couche (16) de polymère est de 5% à 25% en masse ou de 0,75% à 3,75% en volume.

5. Procédé selon l'une quelconque des revendications 1 à 4, dans lequel les tôles métalliques sont en acier selon la norme française super ES, et dans lequel la couche (16) de polymère comprend du polyuréthane et est chargée de grains (18) de nickel pur selon une proportion de 20% en masse environ.

## Claims

1. Process for the manufacture of a coated sheet metal sandwich comprising two external metal sheets (12, 14) between which there is interposed a cushion (16) of a polymer, the exposed face of at least one of the metal sheets (12, 14) having a metallic coating (20, 22), in which:

   - there is applied to one face of a first metal sheet (12, 14) a cushion (16) of liquid polymer containing a solvent and filled with substantially spherical metallic particles (18) made of a material which is more ductile than the material constituting the metal sheets (12, 14), these particles having a diameter D greater than the thickness E of the polymer cushion (16) in the final sheet metal sandwich, this diameter obeying the following relationship:

   $$1.1E < D < 1.6E,$$

   - a second metal sheet (12, 14) is applied to the exposed face of the polymer cushion (16),
   - the metal sheet-polymer assembly (12, 14, 16) is heated,
   - simultaneously with the heating the two metal sheets (12, 14) are pressed the one against the other in a manner such as to compress lightly the metallic particles (18), and
   - a metallic coating (20, 22) is deposited electrolytically on the exposed face of at least one the metal sheets (12, 14).

2. Process according to Claim 1, in which the polymer cushion (16) comprises polyurethane and is filled with particles (18) of pure nickel having a diameter D approximately equal to 1.5E.

**3.** Process according to claim 1 or 2, in which after the application of the polymer cushion (16) to the first metal sheet (12, 14), the solvent is evaporated from this cushion (18) by heating.

**4.** Process according to any one of the foregoing claims, in which the proportion of metallic particles (18) in the polymer cushion (16) is from 5% to 25% by mass or 0.75% to 3.75% by volume.

**5.** Process according to any one of claims 1 to 4, in which the metal sheets are of steel in accordance with the Super ES French standard, and in which the polymer cushion (16) comprises polyurethane and is filled with particles (18) of pure nickel in a proportion of about 20% by mass.

**Patentansprüche**

**1.** Verfahren zum Herstellen eines beschichteten Sandwich-Blechs, das zwei äußere Metallbleche (12, 14) enthält, zwischen die eine Polymerschicht (16) eingeschoben ist, wobei die freie Flache Wenigstens eines der Metallbleche (12, 14) eine Metallbeschichtung (20, 22) aufweist, wobei in dem Verfahren:

- auf eine Fläche eines ersten Metallblechs (12, 14) eine Flüssigpolymerschicht (16) aufgebracht wird, die ein Lösungsmittel enthält und mit im wesentlichen sphärischen Metallkörnern (18) dotiert ist, die aus einem stärker dehnbaren Material als das die Metallbleche (12, 14) bildende Material hergestellt sind, wobei diese Körner einen Durchmesser D besitzen, der größer als die Dicke E der Polymerschicht (16) des endgültigen Sandwich-Blechs ist, wobei dieser Durchmesser D die folgende Beziehung erfüllt:

$$1{,}1E < D < 1{,}6E,$$

- auf die freie Fläche der Polymerschicht (16) ein zweites Metallblech (12, 14) aufgebracht wird,
- die Metallblech/Polymer-Gesamtheit (12, 14, 16) erhitzt wird,
- gleichzeitig zum Erhitzen die beiden Metallbleche (12, 14) in der Weise gegeneinander gepreßt werden, daß die Metallkörner (18) leicht gequetscht werden, und
- auf elektrolytischem Weg auf die freie Fläche wenigstens eines der Metallbleche (12, 14) eine metallische Beschichtung (20, 22) aufgebracht wird.

**2.** Verfahren nach Anspruch 1 , bei dem die Polymerschicht (16) Polyurethan enthält und mit Körnern (18) aus reinem Nickel dotiert ist, die einen Durchmesser D haben, der ungefähr gleich 1,5E ist.

**3.** Verfahren nach Anspruch 1 oder 2, bei dem nach der Aufbringung der Polymerschicht (16) auf das erste Metallblech (12, 14) das Lösungsmittel dieser Schicht (16) durch Erhitzen verdampft wird.

**4.** Verfahren nach irgendeinem der vorangehenden Ansprüche, bei dem der Anteil der Metallkörner (18) in der Polymerschicht (16) von 5 Vol.-% bis 25 Vol.-% oder von 0,75 Vol.-% bis 3,75 Vol.-% reicht.

**5.** Verfahren nach irgendeinem der Ansprüche 1 bis 4, bei dem die Metallbleche aus Stahl gemäß der französischen Norm Super ES sind und bei dem die Polymerschicht (16) Polyurethan enthält und mit Körnern (18) aus reinem Nickel in einem Anteil von ungefähr 20 Gew.-% dotiert ist.